# EUROPÄISCHE PATENTANMELDUNG

(11) **EP 1 457 384 A1**
(43) Veröffentlichungstag der Anmeldung: **15.09.2004**
(21) Anmeldenummer: 04004911.6
(22) Anmeldetag: 03.03.2004
(51) Int. Cl.: B60R 1/00

(54) **Mehrzweck-Fahrerassistenzsystem für Kraftfahrzeuge mittels eines stereoskopischen Kamerasystems**

(30) Priorität: 12.03.2003 DE 10310698
(71) Anmelder: Valeo Schalter und Sensoren GmbH, 74321 Bietigheim-Bissingen (DE)
(72) Erfinder: Ziller, Thomas, 74354 Besigheim (DE)
(74) Vertreter: Bulling, Alexander, Dr.

(57) **Zusammenfassung**

Die Erfindung betrifft ein optisches Erfassungssystem (2) für Kraftfahrzeuge, mit mindestens zwei am Kraftfahrzeug angeordneten Kameraelementen (4, 6), die mit einer zur Früherkennung von Unfallsituationen geeigneten Auswerteeinheit (8) koppelbar sind und/oder diese umfasst, wobei die Kameraelemente (4,6) Sensoren für Parkhilfesysteme und/oder Abstandsregelsysteme und/oder Spurabweichungswarnsysteme des Kraftfahrzeugs bilden.

## Beschreibung

Die Erfindung betrifft ein optisches Erfassungssystem für Kraftfahrzeuge, mit mindestens zwei am Kraftfahrzeug angeordneten Kameraelementen, die mit einer zur Früherkennung von Unfallsituationen geeigneten Auswerteeinheit koppelbar sind und/oder diese umfasst. Die Erfindung betrifft auch eine Auswerteeinheit für ein optisches Erfassungssystem, sowie ein Kraftfahrzeug.

Derartige Erfassungssysteme basieren im Prinzip darauf, dass eine dreidimensionale Erfassung von Bildinformationen nur durch Stereokamerasysteme möglich ist. Die Kameraelemente sind üblicherweise fahrernah, das heißt im Fahrgastraum des Kraftfahrzeugs und dort etwa im Bereich des mittleren Rückspiegels oder oberhalb der Armaturentafel, angeordnet. Die Kameraelemente sind mit einer Auswerteeinheit gekoppelt, die die von den Kameraelementen weitergeleiteten Bildinformationen verarbeiten und gegebenenfalls eine direkte oder indirekte Ansteuerung von Aktoren, wie zum Beispiel Bremsen oder Warnblinkanlage, initiieren.

Obwohl Systeme zur Früherkennung und damit zur Vermeidung von Unfallsituationen einen wichtigen Beitrag zur Erhöhung der Verkehrssicherheit leisten können, ist festzustellen, dass solche Systeme den teuren Einsatz weiterer Bauteile erforderlich machen. Außerdem treiben die zusätzlichen Bauteile das Gesamtgewicht des Kraftfahrzeugs in die Höhe, was wiederum negative Auswirkungen auf die Fahreigenschaften und auf den Verbrauch des Kraftfahrzeugs zur Folge hat.

Moderne Kraftfahrzeuge können mit weiteren Komfort- oder Sicherheitsmerkmalen ausgestattet sein, beispielsweise Parkhilfesystemen, Abstandsregelsystemen oder Spurabweichungswarnsystemen. Diese Systeme sind bisher weitestgehend autark, was zur Folge hat, dass insgesamt eine Vielzahl von Bauteilen benötigt wird.

Hiervon ausgehend ist es Aufgabe der Erfindung, ein optisches Erfassungssystem zur Früherkennung von Unfallsituationen dahingehend weiterzuentwickeln, als dass die Gesamtzahl der an einem Kraftfahrzeug erforderlichen Bauteile verringert werden kann.

Diese Aufgabe wird dadurch gelöst, dass die Kameraelemente des optischen Erfassungssystems Sensoren für Parkhilfesysteme und/oder Abstandsregelsysteme und/oder Spurabweichungswarnsysteme des Kraftfahrzeugs bilden.

Nach dem derzeitigen Stand der Technik werden für jedes der genannten Systeme eigene Sensoren verwendet. So finden beispielsweise für Parkhilfesysteme Ultraschallsensoren und für Abstandsregelsysteme Radarelemente Verwendung. Durch die erfindungsgemäße Integration dieser Sensoren in das optische Erfassungssystem, können diese separaten Sensoren entfallen, wodurch insgesamt weniger Bauteile erforderlich sind, was erhebliche Kosteneinsparungen zur Folge hat.

Dadurch, dass eine Vielzahl von teilweise störungs- und verschmutzungsanfälligen Sensoren durch die Kameraelemente ersetzt werden, die in einem Erfassungssystem zur Früherkennung von Unfallsituationen ohnehin benötigt werden, ergeben sich weitere Vorteile, beispielsweise eine höhere Funktionssicherheit, eine strömungsgünstigere Gestaltung der Außenhaut des Kraftfahrzeugs, in der weniger Sensoren integriert werden müssen, und ein positiver Einfluss auf das Kraftfahrzeugdesign, das durch den Entfall vieler Sensoren weniger Randbedingungen berücksichtigen muss.

Vorteilhafterweise sind die Kameraelemente im Frontbereich oder im Heckbereich des Kraftfahrzeugs angeordnet. Eine Anordnung im Frontbereich des Kraftfahrzeugs ist für Unfallsituationen erheblich, in denen sich das Kraftfahrzeug, in dem das Erfassungssystem angeordnet ist, Personen oder Gegenstände in der Umgebung des Kraftfahrzeugs nähert und diese zu gefährden vermag. Beispielsweise kann durch die Kameraelemente im Frontbereich des Kraftfahrzeugs ein im Vorausbereich des Kraftfahrzeugs auf die Straße fallender Spielball erfasst werden und durch Verarbeitung der Bildinformation und Ansteuerung von Aktoren gegebenenfalls eine Bremsreaktion eingeleitet werden. Die Kameraelemente im Frontbereich können aber auch zur Erfassung von Gegenständen und/oder Personen im vorderen und/oder angrenzenden seitlichen Bereich des Kraftfahrzeugs beim Einparken verwendet werden. Optional oder zusätzlich können die Kameraelemente auch für Abstandsregelsysteme und/oder Spurabweichungswarnsysteme verwendet werden.

Bei Anordnung der Kameraelemente im Heckbereich des Kraftfahrzeugs können solche Precrashsituationen erfasst werden, bei denen sich ein fremdes Fahrzeug von hinten mit überhöhter Geschwindigkeit nähert, wodurch entsprechende Reaktionen ausgelöst werden können, beispielsweise das Blockieren der Gurtsysteme oder das Verfahren eines Sitzes in eine für einen Heckaufprall geeignete Stellung, wie dies aus Systemen der aktuellen S-Klasse von DaimlerChrysler bekannt ist. Die im Heckbereich des Kraftfahrzeugs angeordneten Kameraelemente können gleichzeitig Sensoren für ein Parkhilfesystem für den rückwärtigen und/oder seitlich angrenzenden Bereich des Kraftfahrzeugs bilden. Auch hier ist eine Verknüpfung mit einem Spurabweichungswarnsystem möglich. Zusätzlich oder optional ist prinzipiell auch eine Nutzung der Kameraelemente für ein Abstandswarnsystem möglich, so könnte bspw. bei Annäherung eines fremden Fahrzeugs mit überhöhter Geschwindigkeit die Geschwindigkeit des eigenen Fahrzeugs erhöht werden (unter der Voraussetzung, dass der Vorausbereich des eigenen Fahrzeugs dies zulässt).

Die Kameraelemente können in die oder das Gehäuse der Scheinwerfer des Kraftfahrzeugs integriert sein. Dies ist vorteilhaft, weil damit ein möglichst großer Winkelbereich der Umgebung des Kraftfahrzeugs erfasst werden kann. Die Kameraelemente sind dann an exponierten bzw. weit voneinander fern gelegenen Stellen des Kraftfahrzeugs angeordnet. Ein Kameraelement ist dabei in einem Scheinwerfergehäuse untergebracht und ein weiteres Kameraelement in dem anderen Scheinwerfergehäuse, wobei die Kameraelemente vorzugsweise jeweils hinter der lichtdurchlässigen Abdeckscheibe des jeweiligen Scheinwerfers liegen. Dadurch sind die Kameraelemente sicher geschützt und heben sich nicht vom Gesamtbild des Fahrzeuges ab. Die Integration der Kameraelemente in die Scheinwerfer bringt auch den Vorteil, dass bei Dunkelheit der Umgebungsbereich, in den sich das Fahrzeug bewegt, von den Scheinwerfern optimal ausgeleuchtet und von den Kameraelementen erfasst wird.

Weiterhin ist besonders vorteilhaft, wenn es sich bei den Scheinwerfern um sogenannte Kurvenlichter handelt, bei denen der vom Scheinwerfer ausgeleuchtete Umgebungsbereich abhängig vom Winkeleinschlag des Lenkrades des Fahrzeugs ist. Beim Verdrehen des Lenkrades wird der Bereich der Ausleuchtung gegenüber dem Fahrzeug verschwenkt bzw. verändert. In diesem Zusammenhang können die Kameraelemente ebenfalls in Abhängigkeit des Winkeleinschlags des Lenkrades ausgerichtet werden, wodurch eine Optimierung der Umgebungsbereichserfassung der Kameraelemente gegeben ist. Das Umfeld, in das das Fahrzeug einfährt, kann optimal erfasst werden. Die Ausrichtung der Kameraelemente und der Bereich der Ausleuchtung durch die Scheinwerfer können dabei synchron verändert werden. Die Kameraelemente und die Mitteln, die den Ausleuchtwinkel der Scheinwerfer ändern, werden dann zusammen bewegt.

Die Kameraelemente können auch in den Kühlergrill und/oder in die Motorhaube und/oder in Lufteinsätze integriert sein. Natürlich können die Kameraelemente auch an weiteren Stellen, beispielsweise in den Stoßfängern des Kraftfahrzeugs, angeordnet sein.

Besonders vorteilhaft ist es, wenn eine Auswerteeinheit vorgesehen ist, die auch für Parkhilfesysteme und/oder Abstandsregelsysteme und/oder Spurabweichungswarnsysteme einsetzbar ist. Hierdurch kann vermieden werden, dass, obgleich die Kameraelemente als Sensoren für verschiedene Systeme verwendet werden, für jedes dieser Systeme wiederum ein eigenes Steuergerät erforderlich ist. Durch die Integration dieser Steuerfunktionen in einer Auswerteeinheit können also wiederum Bauteile und somit Kosten eingespart werden.

Vorteilhafterweise ist eine Anzeigeeinheit vorgesehen, die mit den Kameraelementen und/oder der Auswerteeinheit gekoppelt ist. Eine solche Anzeigeeinheit kann beispielsweise durch einen Farbbildschirm gebildet sein, der in den Armaturenträger des Kraftfahrzeugs integriert ist, und der gegebenenfalls auch als Anzeigeeinheit für Navigationssysteme oder Multimediageräte dient. Die Kameraelemente können direkt mit der Anzeigeeinheit gekoppelt sein, so dass wahlweise das Einzelbild eines Kameraelements oder das aus den Bildinformationen von zwei Kameraelementen gewonnene Bild in der Anzeigeeinheit angezeigt werden kann. Natürlich kann die Anzeigeeinheit auch mit der Auswerteeinheit gekoppelt sein, wodurch es möglich ist, die durch die Kameraelemente gewonnenen Bildinformationen zu bearbeiten und beispielsweise mit zusätzlichen Bildelementen, wie Warnpfeilen oder Abstandsdiagrammen, zu ergänzen.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

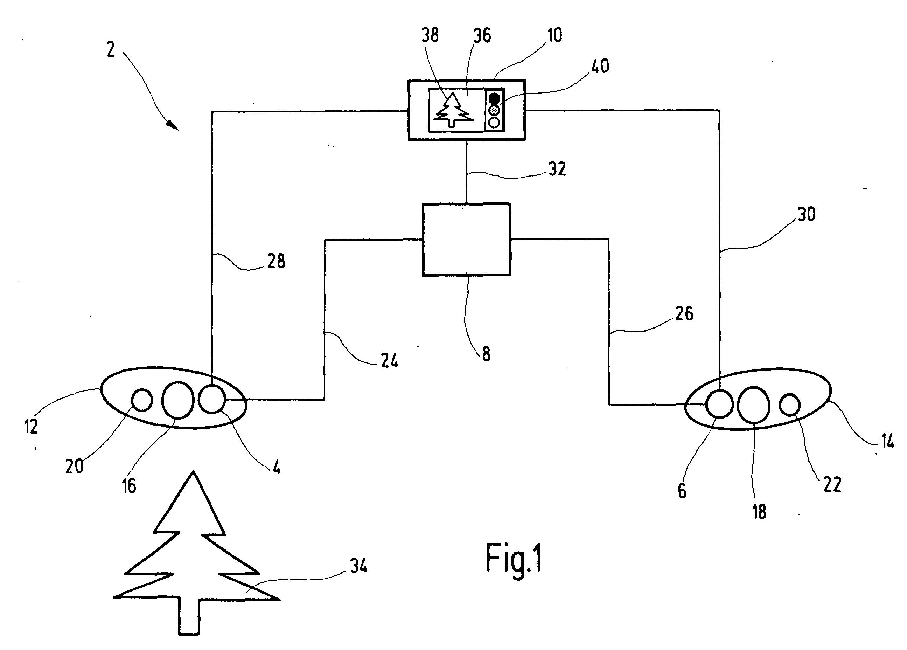

In der Figur 1 ist ein allgemein mit dem Bezugszeichen 2 bezeichnetes erfindungsgemäßes optisches Erfassungssystem schematisch dargestellt, das zwei Kameraelemente 4 und 6, eine Auswerteeinheit 8 und eine Anzeigeeinheit 10 aufweist. Die Kameraelemente 4 und 6 sind in schematisch dargestellten Scheinwerfergehäusen 12 und 14 integriert, die in den Frontbereich eines nicht dargestellten Kraftfahrzeugs integriert sind. In den Scheinwerfergehäusen 12 und 14 sind außerdem die eigentlichen Scheinwerfer 16 und 18, sowie Blinkleuchten 20 und 22 angeordnet.

Die Kameraelemente 4 und 6 sind über Datenleitungen 24 und 26 mit der Auswerteeinheit 8 verbunden. Die Kameraelemente 4 und 6 sind außerdem über Datenleitungen 28 und 30 mit der Anzeigeeinheit 10 verbunden. Die Auswerteeinheit 8 ist über eine Datenleitung 32 mit der Anzeigeeinheit 10 verbunden.

Die Kameraelemente 4 und 6 bilden zusammen mit der Auswerteeinheit 8 ein Erfassungssystem zur Früherkennung von Unfallsituationen. Die Kameraelemente 4 und 6 bilden jedoch gleichzeitig Sensoren für ein Parkhilfesystem, für das die Auswerteeinheit 8 ebenfalls eingesetzt ist.

Mit dem dargestellten Erfassungssystem können Objekte in der Umgebung des Kraftfahrzeugs sowohl zur Früherkennung von Unfallsituationen als auch beim Einparken des Kraftfahrzeugs erfasst werden. Beispielsweise wird durch das Kameraelement 4 eine Bildinformation von einem in der Umgebung des Kraftfahrzeugs angeordneten Baum 34 erzeugt und die Bildinformation über die Datenleitung 28 an die Anzeigeeinheit 10 weitergeleitet. Die Anzeigeeinheit 10 weist einen Bildbereich 36 auf, in dem ein Abbild 38 des Baums 34 angezeigt ist. Hierdurch gewinnt der Fahrer des Kraftfahrzeugs direkt die Information über die Art und Größe des Hindernisses in der Umgebung des Kraftfahrzeugs, im vorliegenden Fall des Baumes 34.

Die Kameraelemente 4 und 6 sind über die Datenleitung 24 und 26 auch mit der Auswerteeinheit 8 verbunden, wodurch die beispielsweise durch das Kameraelement 4 gewonnene Bildinformation über die Datenleitung 24 an die Auswerteeinheit 8 geleitet wird und dort ausgewertet werden kann. Nach Auswertung der Bildinformationen können entsprechende Signale über die Datenleitung 32 an die Anzeigeeinheit 10 geleitet werden, um dort in einem Zusatzfeld 40 grafische Elemente anzuzeigen, die dem Fahrer den Abstand zum Hindernis 34 visualisieren können. Selbstverständlich können optional oder zusätzlich auch entsprechende akustische Warnmeldungen ausgegeben werden. Somit werden die Kameraelemente 4 und 6 nicht nur zur Erfassung von Unfallsituationen verwendet, sondern gleichzeitig auch als Sensoren für ein Parkhilfesystem.

## Patentansprüche

1. Optisches Erfassungssystem (2) für Kraftfahrzeuge, mit mindestens zwei am Kraftfahrzeug angeordneten Kameraelementen (4, 6), die mit einer zur Früherkennung von Unfallsituationen geeigneten Auswerteeinheit (8) koppelbar sind und/oder diese umfasst, **dadurch gekennzeichnet, dass** die Kameraelemente (4, 6) Sensoren für Parkhilfesysteme und/oder Abstandsregelsysteme und/oder Spurabweichungswarnsysteme des Kraftfahrzeugs bilden.

2. Optisches Erfassungssystem (2) nach Anspruch 1, **dadurch gekennzeichnet, dass** die Kameraelemente (4, 6) im Frontbereich des Kraftfahrzeugs angeordnet sind.

3. Optisches Erfassungssystem (2) nach Anspruch 1 oder 2, **dadurch gekennzeichnet, dass** die Kameraelemente (4, 6) im Heckbereich des Kraftfahrzeugs angeordnet sind.

4. Optisches Erfassungssystem (2) nach einem der vorhergehenden Ansprüche, **dadurch gekennzeichnet, dass** die Kameraelemente (4, 6) in die oder das Gehäuse (12, 14) der Scheinwerfer (16, 18) des Kraftfahrzeugs integriert sind.

5. Optisches Erfassungssystem (2) nach Anspruch 4, **dadurch gekennzeichnet, dass** die Kameraelemente (4, 6) von der jeweiligen Abdeckscheibe des jeweiligen Scheinwerfers schützend abgedeckt sind.

6. Optisches Erfassungssystem (2) nach Anspruch 4 oder 5, **dadurch gekennzeichnet, dass** die Schweinwerfer Kurvenlichter sind, wobei die Kameraelemente (4, 6) in Abhängigkeit des durch die Scheinwerfer ausgeleuchtbaren Umgebungsbereich des Fahrzeuges und/oder in Abhängigkeit des Winkeleinschlags des Lenkrades des Fahrzeugs ausgerichtet werden können.

7. Optisches Erfassungssystem (2) nach einem der vorhergehenden Ansprüche, **dadurch gekennzeichnet, dass** die Kameraelemente (4, 6) in den Kühlergrill und/oder in die Motorhaube und/oder in Lufteinlässe integriert sind.

8. Optisches Erfassungssystem (2) nach einem der vorhergehenden Ansprüche, **dadurch gekennzeichnet, dass** eine Auswerteeinheit (8) vorgesehen ist, die auch für Parkhilfesysteme und/oder Abstandsregelsysteme und/oder Spurabweichungswarnsysteme einsetzbar ist.

9. Optisches Erfassungssystem (2) nach einem der vorhergehenden Ansprüche, **dadurch gekennzeichnet, dass** eine Anzeigeeinheit (10) vorgesehen ist, die mit den Kameraelementen (4, 6) und/oder der Auswerteeinheit (8) gekoppelt ist.

10. Auswerteeinheit (8) für ein optisches Erfassungssystem (2) nach einem der vorhergehenden Ansprüche, die mit Kameraelementen (4, 6) eines Kraftfahrzeugs koppelbar ist und zur Früherkennung von Unfallsituationen geeignet ist, wobei die Auswerteeinheit (8) für Parkhilfesysteme und/oder Abstandsregelsysteme und/oder Spurabweichungswarnsysteme einsetzbar ist.

11. Auswerteeinheit (8) für ein optisches Erfassungssystem (2) nach einem der Ansprüche 1 bis 9, die mit Kameraelementen (4, 6) eines Kraftfahrzeugs koppelbar ist und zur Früherkennung von Unfallsituationen geeignet ist, **dadurch gekennzeichnet, dass** die Auswerteeinheit (8) zusätzlich für mindestens zwei der Systeme für Parkhilfe, Abstandsregelung und Spurabweichungswarnung einsetzbar ist.

12. Kraftfahrzeug mit mindestens zwei am Kraftfahrzeug angeordneten Kameraelementen (4, 6), die mit einer zur Früherkennung von Unfallsituationen geeigneten Auswerteeinheit (8) gekoppelt sind, wobei das Kraftfahrzeug ein Parkhilfesysteme und/oder Abstandsregelsystem und/oder Spurabweichungswarnsystem aufweist, **dadurch gekennzeichnet, dass** die Kameraelemente (4, 6) Sensoren für das Parkhilfesystem und/oder das Abstandsregelsystem und/oder das Spurabweichungswarnsystem bilden.

13. Kraftfahrzeug nach Anspruch 12, **dadurch gekennzeichnet, dass** eine Anzeigeeinheit (10) vorgesehen ist, die mit den Kameraelementen (4, 6) und/oder der Auswerteeinheit (8) gekoppelt ist.
